# EUROPÄISCHE PATENTSCHRIFT

(11) **EP 1 414 269 B1**
(45) Veröffentlichungstag und Bekanntmachung des Hinweises auf die Patenterteilung: **29.04.2009**
(21) Anmeldenummer: 03026776.9
(22) Anmeldetag: 21.11.2003
(51) Int. Cl.: H04R 25/00

(54) **Grundplatte mit Elektronikmodul**
Base plate with electronic module
Plaque de base avec module électronique

(43) Veröffentlichungstag der Anmeldung: 28.04.2004
(73) Patentinhaber: PHONAK AG, 8712 Stäfa (CH)
(72) Erfinder: Gabathuler, Bruno, 8712 Stäfa (CH)
(74) Vertreter: Troesch Scheidegger Werner AG

(56) Entgegenhaltungen:
- GB-A- 2 118 397
- US-A- 4 598 177
- US-A1- 2003 179 895

## Beschreibung

Die vorliegende Erfindung betrifft eine Grundplatte und mindestens ein darin aufgenommenes Elektronikmodul.

Herkömmlicherweise werden beispielsweise beim Aufbau von Hörhilfen resp. Hörgeräten eine Grundplatte oder Faceplate eingesetzt, an welche einerseits die Schale, d.h. die äussere Gehäusewand, sowie die elektronischen Bauelemente angeordnet werden.

So wird beispielsweise bei Im-Ohr-Hörgeräten eine Grundplatte mit einer Öffnung verwendet, an welche die Schale befestigt wird. In der Regel erfolgt die Befestigung zwischen der Grundplatte und der an den Träger des Hörgerätes angepassten Schale mittels Verklebung resp. Verschweissung oder durch Herstellung in Lasersintering oder Stereolithographie ganzer Gehäuse für Im-Ohr-Hörgeräte. In die Öffnung wird die komplette Elektronik des Gerätes vorteilhaft in Modulform eingesetzt resp. eingeklinkt. In diesem Modul ist in der Regel ebenfalls das Batteriefach integriert, welches einen über eine Achse schwenkbar ausgebildeten Batteriedeckel aufweist. Damit lässt sich einfach die Batterie, welche der Versorgung des Moduls mit Energie dient, auswechseln. Diese Auswechslung kann sowohl von Fachleuten wie auch vom Träger des Hörgerätes selbst erfolgen. Der Vorteil dieser Konstruktion liegt darin, dass ein einheitliches Modul für unterschiedliche, in der Regel individuell gefertigte Hörgeräte, eingesetzt werden kann, was sich positiv auf die Kosten des Hörgerätes auswirkt.

Dabei werden allerdings bedingt durch die Integration der Achse des Batteriedeckels im resp. auf dem Modul alle Kräfte beim Manipulieren des Deckels, beispielsweise beim Schliessen oder Öffnen des Deckels, auf das Modul übertragen. Diese Kräfte können einerseits die elektronischen Komponenten des Moduls direkt beschädigen und andererseits die elektrischen Verbindungen zwischen diesen Komponenten beschädigen. Insbesondere die Kontakte, Leiterbahnen und Drähte des Moduls sind sehr empfindlich auf derartige mechanische Krafteinflüsse.

Die US 4 598 177 offenbart eine Grundplatte für ein Hörgerät mit einer Öffnung, die einen Batterieaufnahmeraum umfasst, an den ein Bereich zur Aufnahme eines Drehrades für die Lautstärkregelung anschliesst, von dem seitlich ein Nebenraum ab geht. Im Nebenraum werden Elemente zur Befestigung des Drehrades für die Lautstärkeregelung fixiert. Zwischen zwei einander gegenüberliegenden Wandungen der Öffnung erstreckt sich ein an den Wandungen befestigter Stab um den eine Tür zum Verschliessen des Batterieaufnahmeraums drehbar gelagert ist.

Diese Konstruktion hat zwar den Vorteil, dass die Kräfte bei der Manipulation des Deckels nur auf die Grundplatte und nicht auf empfindliche elektronische Module übertragen werden. Nachteilig ist jedoch der relativ komplexe Aufbau der Grundplatte und das mit relativ hohem Aufwand verbundene Einsetzen und Auswechseln des Drehrades für die Lautstärkeregelung.

Die GB 2 118 397 offenbart ein Hörgerät mit einem durch eine Deckplatte verschliessbaren Einsatzteil zum Einführen in das Ohr. Die Deckplatte trägt eine schwenkbar befestigte Batteriehalterung und ist mit einer Öffnung versehen, welche durch die Batteriehalterung verschlossen wird, wenn letztere in die Verschlussstellung geschwenkt ist. Die Öffnung weist einen quer zur Längserstreckung der Öffnung angeordneten erweiterte Bereich auf, der von einem Verschlusselement gefüllt ist welches den Lautstärkeregler trägt und verschiebbar an der Deckplatte gelagert ist, so dass das Verschlusselement aus seiner Verschlussposition verschiebbar und entfernbar ist.

Nachteilig ist auch hier der verhältnismässig komplexe Aufbau der Grundplatte.

Angesichts der oben genannten Nachteile, ist es Aufgabe der vorliegenden Erfindung eine Grundplatte mit mindestens einem darin aufgenommenen Elektronikmodul bereitzustellen, bei welchem die Grundplatte im Vergleich zum Stand der Technik über einen wesentlich vereinfachten Aufbau verfügt und bei der die Module einfach von Aussen zugänglich eingesetzt und ausgewechselt werden können.

Diese Aufgabe wird erfindungsgemäss durch eine Einrichtung mit den Merkmalen nach Anspruch 1 gelöst.

Weitere erfindungsgemässe Ausführungsformen ergeben sich aus den Merkmalen der Ansprüche 2 bis 9.

Durch die Anordnung von seitlich der Öffnung zur Einbringung des resp. der Elektronikmodule ausgebildeten Aussparungen und Führungselementen lassen sich die Module einfach von Aussen vertikal in die Öffnung einsetzen und schliesslich seitlich in die endgültige Position verschieben. Dank den Führungselementen werden sie dort in der endgültigen Position fixiert und sind dennoch von Aussen zugänglich oder stehen sogar nach Aussen vor.

Vorzugsweise weist die Öffnung einen im Wesentlichen rechteckigen oder quadratischen Querschnitt auf, welcher nach Einsetzen der Elektronikmodule die Form im Wesentlichen nach wie vor beibehält, wobei lediglich die Breite ggf. leicht kleiner ausfällt. Vorteilhaft weisen die eingesetzten Elektronikmodule gegen die Öffnung hin im Wesentlichen eine flache, gerade Oberfläche auf.

Vorzugsweise sind die Führungselemente durch Nuten und/oder Führungsflächen gebildet, welche gegen entsprechend ausgebildete Anschlagflächen des resp. der Elektronikmodule in Anschlag gelangen. So kann beispielsweise jeweils ein Elektronikmodul in eine Aussparung eingeschoben werden, oder ggf. auch mehrere Module hintereinander, welche eine entsprechende Formgebung aufweisen, dass kein offener Spalt zwischen den einzelnen Modulen gebildet wird.

Vorzugsweise sind jeweils zwei einander in der Öffnung gegenüberliegende Aussparungen für jeweils ein Elektronikmodul ausgebildet. Damit lassen sich die beiden Elektronikmodule nacheinander in die Öffnung einführen und seitlich einander gegenüberliegend in die jeweiligen Aussparungen einschieben. Dabei bleibt zwischen den beiden Elektronikmodulen eine Öffnung vorhanden. In diese Öffnung kann beispielsweise eine Batterie eingesetzt werden.

Vorzugsweise weisen die Elektronikmodule elektronische Komponenten wie Verstärker, Schalter, Knöpfe usw. auf. Diese Komponenten können ihrerseits vorteilhaft als lösbare Module ausgebildet sein.

Vorzugsweise weisen die Elektronikmodule Kontakte zur Verbindung mit einer Batterie oder einem Akkumulator auf. Gerade beim Einsatz von zwei einander gegenüberliegenden Elektronikmodulen kann dabei ein Batteriefach gebildet werden, in welches die Batterie resp. Akkumulator eingeschoben werden kann um damit das rep. die Module mit Strom zu versorgen.

Erfindungsgemäss ist ein Deckel vorgesehen, der den nach dem Einsetzen und verschieben in die Endposition verbleibende Spalt der Öffnung beim Einsatz von mindestens zwei einander gegenüberliegend angeordneten Elektronikmodulen verschliesst. Dabei ist dieser Deckel vorzugsweise lösbar und/oder verschwenkbar mit der Grundplatte verbunden ist.

Hierfür ist quer zur Öffnung mindestens eine die Öffnung überspannende und in der Grundplatte eingebettete Stange oder mindestens ein Stab angeordnet, welcher der schwenkbaren Befestigung des Deckels und als Führungselement für das Elektronikmodul dient. Dabei ist die Stange vorteilhaft in der Grundplatte gelagert und die auf die Stange ausgeübten Kräfte werden nur auf die Grundplatte und nicht auch auf die Elektronikmodule übertragen. Gleichzeitig kann die Stange auch vorteilhaft als stabiles Führungselement und Anschlag für die Elektronikmodule dienen.

Wenn nun vorteilhaft der die Öffnung verschliessende Deckel mit der Stange verbunden wird, beispielsweise durch eine verschwenkbare Steckverbindung, kann der Deckel vorteilhaft zur Aufnahme einer Batterie oder eines Akkumulators dienen.

Durch Verschwenken des Deckels in die geschlossene Position kann die Batterie in federnden Anschlag mit entsprechend an den Elektronikmodulen angeordneten elektrischen Kontaktzungen gelangen und damit der Stromversorgung der elektronischen Module dienen. Die durch die Drehbewegung des Deckels verursachten Kräfte werden dabei über die Stange auf die Grundplatte übertragen und von dieser aufgenommen, ohne dass die Kräfte die Elektronikmodule beeinflussen.

Die erfindungsgemässe Ausbildung der Grundplatte eignet sich besonders für kleine Abmessungen, wie sie gerade im Bereich der Hörhilfen resp. Hörgeräte vorkommen. Gerade für Im-Ohr-Hörgeräte eignet sich der Aufbau dank der einfachen Ausführung auch im miniaturisierten Bereich besonders gut. Dabei kann ein einfacher Austausch der Batterien auch durch nicht geschulte Personen, beispielsweise die Benutzer des Hörgerätes, gewährleistet werden, ohne dass durch die Bewegung des als Batteriefach ausgebildeten Deckels die Elektronikmodule beschädigt werden können.

Dadurch, dass standardisierte Module verwendet werden können, kann gerade der Aufbau von Im-Ohr-Hörgeräten besonders wirtschaftlich erfolgen, da dort die Schalen entsprechend den unterschiedlichen geometrischen Verhältnissen der Träger der Hörgeräte jeweils individuell angepasst werden müssen. Beim Einsatz von austauschbaren Elektronikmodulen können diese Geräte auch bei einem Defekt weiterhin verwendet werden, da lediglich das defekte oder auszutauschende Modul ausgewechselt werden muss.

Aus diesem Grund wird erfindungsgemäss die Verwendung nach Anspruch 8 beansprucht.

Ein Ausführungsbeispiel der Erfindung wird nachstehend anhand der Zeichnungen noch näher erläutert. Es zeigen
Fig. 1 die Ansicht auf eine erfindungsgemäss ausgebildete Grundplatte mit zwei eingesetzten Elektronikmodulen;
Fig. 2 die Ansicht der beiden Module nach Figur 1 ohne Grundplatte in zusammengeschobener Position;
Fig. 3 die Ansicht nach Figur 2 in der Endposition; und
Fig. 4 die Ansicht nach Figur 1 von der Innenseite der Grundplatte her gesehen.

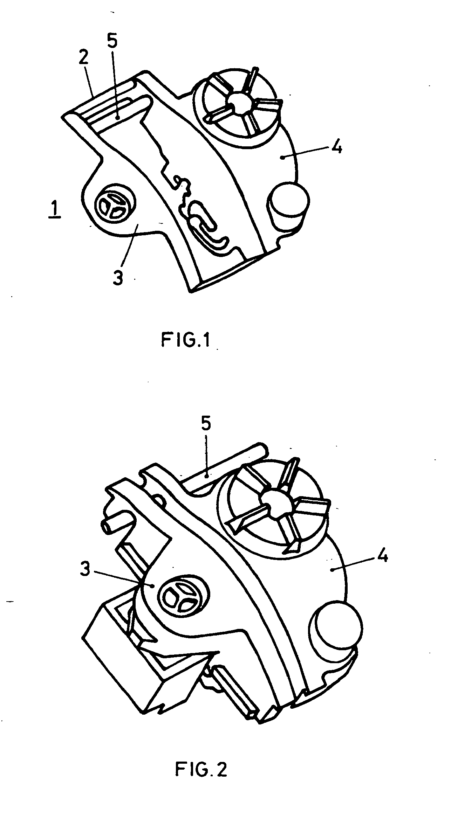

In Figur 1 ist eine Grundplatte 1 eines Hörgerätes von der Aussenseite her dargestellt. In die Öffnung 2 der Grundplatte sind zwei Elektronikmodule 3 und 4 eingesetzt und seitlich in ihrer Endposition verschoben dargestellt. Zwischen den beiden Elektronikmodulen 3 und 4 ist weiterhin eine im Wesentlichen rechteckige Öffnung vorhanden.

Die Öffnung wird weiter von einer Stange 5 überspannt, welche seitlich in der Grundplatte 1 gelagert resp. eingebettet ist. Diese Stange 5 dient der verschwenkbaren Befestigung eines Deckels (nicht dargestellt), welcher die verbleibende Öffnung verschliessen kann. Dieser Deckel kann vorteilhaft der Aufnahme einer Batterie in Knopfform dienen, welche zur Stromversorgung der Elektronikmodule dienen kann.

In Figur 2 sind nun noch die beiden Elektronikmodule 3 und 4 der besseren Übersichtlichkeit halber ohne die Grundplatte 1 dargestellt. Die beiden Elektronikmodule 3 und 4 sind dabei praktisch nebeneinander liegend angeordnet. In dieser Position lassen sich die Module 3 und 4 in die Öffnung 2 der Grundplatte 1 einschieben. In der Regel wird dabei zuerst das eine Modul 3 und danach das zweite Modul 4 eingeschoben, da die Öffnung 2 lediglich eine beschränkte Breite aufweist. In der dargestellten Position ist das Modul 3 bereits in der seitlichen Endposition, ersichtlich aus seiner Lage in Bezug auf die ebenfalls dargestellte Stange 5.

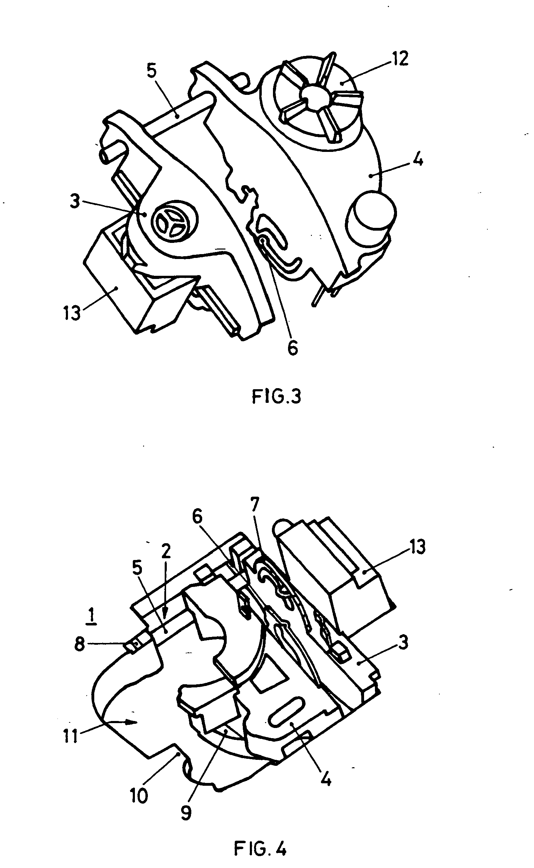

Das zweite Modul 4 kann nun seitlich in seine Endposition verschoben werden, wie dies in Figur 3 dargestellt ist. Damit wird zwischen den beiden Modulen 3 und 4 die bereits aus Figur 1 ersichtliche Öffnung gebildet. Diese Öffnung weist nun gerade die Breite auf, um eine Batterie zwischen den beiden Modulen 3 und 4 einzuschieben, welche jeweils mit an den beiden Modulen 3 und 4 vorteilhaft angeordneten Kontaktzungen 6 resp. 7 in leitenden Kontakt gebracht werden kann. Dabei kann der bereits erwähnte Deckel in aus dem Stand der Technik bekannter Art und Weise als Batteriedeckel ausgebildet sein und die Batterie fixieren und in die Endposition verschwenken.

Aus der Figur 4 ist die Ansicht der Position der beiden Module 3 und 4 nach Figur 2 von der unteren Seite der Grundplatte 1 her gesehen dargestellt. Hier sind an der Unterseite der Grundplatte 1 ausgebildete Führungsnuten 8 ersichtlich, gegen welche entsprechend ausgebildete Anschlagsflächen des Moduls 4 beim seitlichen Einschieben in Anschlag gelangen. Eine weitere Anschlagfläche 9 des Moduls 4 ist ebenfalls ersichtlich, welche gegen eine Zapfen 10 im Bereich der Aussparung 11 der Grundplatte 1 von Oben in Anschlag gelangen kann. Die Stange 5 dient dabei auch als Führungsmittel resp. Anschlag für das Modul 3. Die Führungsnute 8 resp. Anschlagflächen 9 können nockenartige Erhebungen aufweisen, welche als Rastelemente für die lösbare Fixierung der Elektromodule 3 resp. 4 in ihren Endpositionen dienen.

Die Elektronikmodule 3 resp. 4 weisen ihrerseits die elektronischen Komponenten vorteilhaft in Modulform auf, wie beispielsweise einem Drehschaltermodul 12 oder einem Mikrofonmodul 13.

## Patentansprüche

1. Anordnung umfassend eine Grundplatte (1) und mindestens ein darin aufgenommenes Elektronikmodul (3;4), wobei das Elektronikmodul (3;4) durch eine Öffnung (2) oder einen Schlitz in der Grundplatte (1) in diese derart einbringbar und verbindbar ist, dass ein Teil des Elektronikmoduls (3;4) von der Einschiebeseite her freigelegt bleibt oder nach Aussen absteht, wobei die Grundplatte (1) im Bereich der Öffnung (2) entsprechend der Querschnittsform des Elektronikmoduls (3;4) seitlich Aussparungen (11) aufweist und wobei im Bereich der Aussparungen (11) Führungselemente (8,10) ausgebildet sind, derart, dass das Elektronikmodul (3;4) in der eingebrachten in Bezug auf die durch die Grundplatte (1) definierte Ebene senkrechten Endposition seitlich in Bezug auf die Öffnung (2) in die Aussparung (11) einschiebbar ist und wobei ferner ein Deckel vorgesehen ist, der den nach dem Einsetzen und Verschieben in die Endposition verbleibenden Spalt der Öffnung (2) abschliesst, wobei der Deckel verschwenkbar und vorzugsweise lösbar mit der Grundplatte (1) verbunden ist, wobei quer zur Öffnung (2) mindestens eine die Öffnung (2) überspannende und in der Grundplatte (1) eingebettete Stange (5) oder mindestens ein Stab angeordnet ist, welcher der schwenkbaren Befestigung des Deckels und als Führungselement für das Elektronikmodul (3;4) dient.

2. Anordnung nach Anspruch 1, wobei die Öffnung (2) einen im wesentlichen rechteckigen oder quadratischen Querschnitt aufweist.

3. Anordnung nach Anspruch 1 oder 2, wobei die Führungselemente (8;10) aus in der Grundplatte (1) ausgebildeten Nuten und/oder Führungsflächen bestehen, gegen welche entsprechend ausgebildete Anschlagflächen (9) des Elektronikmoduls (3;4) in Anschlag gelangen.

4. Anordnung nach einem der Ansprüche 1 bis 3, wobei zwei einander in der Öffnung (2) gegenüberliegende Aussparungen (11) für jeweils ein Elektronikmodul (3;4) ausgebildet sind.

5. Anordnung nach einem der Ansprüche 1 bis 4, wobei das Elektronikmodul (3;4) elektronische Komponenten wie beispielsweise Verstärker, Schalter und Knöpfe aufweist, vorzugsweise jeweils als von der Grundplatte (1) lösbare Module (12;13) ausgebildet.

6. Anordnung nach einem der Ansprüche 1 bis 5, wobei das Elektronikmodul (3;4) Kontakte (6;7) zur Verbindung mit einer Batterie oder Akkumulator aufweist.

7. Anordnung nach einem der Ansprüche 1 bis 6, wobei der Rand des Deckels in geschlossener Stellung mindestens bereichsweise das Elektronikmodul (3;4) derart abdeckt, dass es in der Endposition fixiert bleibt.

8. Verwendung einer Anordnung nach einem der Ansprüche 1 bis 7 in Hörhilfen oder Hörgeräten.

## Claims

1. Arrangement comprising a base plate (1) and accommodating therein at least one electronic module (3;4), the electronic module (3;4) being placeable and connectable via an opening (2) or a slit in the base plate (1) into this from the push in side in such a way that one part of the electronic module (3;4) remains uncovered or protrudes outwardly, the base plate (1) comprising lateral recesses (11) according to the shape of the cross-section of the electronic module (3;4) in the region of the opening (2) and guiding elements (8;10) are formed in the region of the recesses (11) in such a way that the electronic module (3;4) is slideable into the recess (11) in the inserted perpendicular end position in relation to the plane defined by the base plate (1) laterally in relation to the opening (2) and further a cover being provided, which locks the remaining slit of the opening (2) after inserting and shifting into the end position, the pivotable and preferably detachable cover being connected to the base plate (1), a bar (5) or at least a stick bridging the opening (2) and embedded into the base plate (1) being arranged transverse to the opening (2), which serves as the pivotable fastening of the cover and as guiding element for the electronic module (3;4).

2. Arrangement according to claim 1, the opening (2) comprising a substantially rectangular or quadratic cross-section.

3. Arrangement according to claim 1 or 2, the guiding elements (8;10) consisting of grooves being formed in the base plate (1) and/or guiding faces, against which corresponding stopping faces (9) of the electronic module (3;4) get moved up against.

4. Arrangement according to one of the claims 1 to 3, two recesses (11) opposing each other being formed in the opening (2) for each electronic module (3;4).

5. Arrangement according to one of the claims 1 to 4, the electronic module (3;4) comprising electronic components as for example amplifiers, actuators and buttons, each preferably formed as modules (12;13) detachable from the base plate (1).

6. Arrangement according to one of the claims 1 to 5, the electronic module (3;4) comprising contacts (6;7) for connecting to a battery or accumulator.

7. Arrangement according to one of the claims 1 to 6, the edge of the cover in closed position covering the electronic module (3;4) at least in some section in such a way that it remains fixed in the end position.

8. Use according to one of the claims 1 to 7 in hearing aids or hearing devices.

## Revendications

1. Assemblage comprenant un plateau de base (1) et accueillant là-dedans au moins un module électronique (3;4), le module électrique (3;4) étant déposable et reliable par une ouverture (2) ou une fente dans le plateau de base (1) dans celle-ci du côté à insérer tellement qu'une part du module électronique (3;4) reste dégagée ou dépasse vers l'extérieur, le plateau de base (1) comprend latéral des creux (11) correspondant à la forme de la section transversale du module électronique (3;4) dans la région de l'ouverture (2) et des éléments de guidage (8;10) sont formés dans la région des creux (11) tellement que le module électronique (3;4) est insérable dans le creux (11) en position terminale rentrée perpendiculaire en rapport avec la plane définie par le plateau de base (1) de façon latérale en rapport avec l'ouverture (2) et de plus un couvercle étant prévu qui couvre la fente de l'ouverture (2) restante après l'insertion et le déplacement en position terminale, le couvercle pivotant et préférablement détachable étant relié au plateau de base (1), une perche (5) ou au moins un bâton étant arrangée en travers de l'ouverture (2), qui sert à l'attachement pivotant du couvercle et comme élément de guidage pour le module électronique (3;4).

2. Assemblage selon la revendication 1, l'ouverture (2) comportant pour l'essentiel une section transversale rectangulaire ou quadratique.

3. Assemblage selon la revendication 1 ou 2, les éléments de guidage (8;10) consistant en des rainures étant formées dans le plateau de base (1) et/ou des faces de guidage contre lesquelles des faces d'arrêt (9) correspondantes du module électronique (3;4) parviennent à l'arrêt.

4. Assemblage selon une des revendications 1 à 3, deux creux (11) en face l'un de l'autre étant formés dans l'ouverture (2) à chaque fois pour un module électronique (3;4).

5. Assemblage selon une des revendications 1 à 4, le module électronique (3;4) comportant des composants électroniques comme par exemple amplificateurs, interrupteurs et boutons, préférablement formés à chaque fois comme des modules détachables (12;13) du plateau de base (1).

6. Assemblage selon une des revendications 1 à 5, le module électrique (3;4) comportant des contacts (6;7) à relier avec une pile ou accumulateur.

7. Assemblage selon une des revendications 1 à 6, le rebord du couvercle en position fermée couvrant le module électronique (3;4) au moins d'une partie de la région tellement qu'il reste fixé dans la position terminale.

8. Utilisation selon une des revendications 1 à 7 dans des aides auditives ou appareils auditifs.
